(19) Europäisches Patentamt

European Patent Office

Office européen des brevets

(11) Veröffentlichungsnummer: **0 259 933 B1**

(12) **EUROPÄISCHE PATENTSCHRIFT**

(45) Veröffentlichungstag der Patentschrift: **01.04.92**

(21) Anmeldenummer: **87201719.9**

(22) Anmeldetag: **09.09.87**

(51) Int. Cl.5: **G02B 6/10**, G02F 1/01, G02F 1/09

(54) **Optischer Polarisationsregler mit einer Wellenleiterstruktur.**

(30) Priorität: **10.09.86 DE 3630741**

(43) Veröffentlichungstag der Anmeldung:
**16.03.88 Patentblatt 88/11**

(45) Bekanntmachung des Hinweises auf die
Patenterteilung:
**01.04.92 Patentblatt 92/14**

(84) Benannte Vertragsstaaten:
**DE FR GB IT NL SE**

(56) Entgegenhaltungen:
**US-A- 4 153 328**

**APPLIED OPTICS, Band 20, Nr. 14, Juli 1981,
Seiten 2444-2450, New York, US; A. SHIBUKA-
WA et al.: "Optical TE-TM mode conversion
in double epitaxial garnet waveguide"**

**PATENT ABSTRACTS OF JAPAN, Band 6, Nr.
258 (P-163)[1136], 17. Dezember 1982; & JP -
A - 57 155 518**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB IT NL SE**

(72) Erfinder: **Dammann, Hans, Dr.
Eichenstrasse 27
W-2081 Tangstedt(DE)**
Erfinder: **Pross, Elke
Scheelring 14
W-2000 Hamburg 61(DE)**
Erfinder: **Tolksdorf, Wolfgang, Prof. Dr.
Königsbergerstrasse 34
W-2082 Tornesch(DE)**

EP 0 259 933 B1

APPLIED OPTICS, Band 23, Nr. 7, April 1984, Seiten 1079-1081, New York, US; Y. OKAMU-RA et al.: "TE-TO-TM mode conversion in LA and GA-substituted YIG waveguide by alternating-coupling coefficient"

APPLIED PHYSICS LETTERS, Band 41, Nr. 9, November 1982, Seiten 779-781, New York, US; A.D. FISHER et al.: "Optical guided wave interactions with magnetostatic waves at microwave frequencies"

Erfinder: **Zinke, Manfred Bruno**
**Reyensweg 10**
**W-2000 Hamburg 76(DE)**
Erfinder: **Rabe, Gert**
**Nieland 22**
**W-2080 Pinneberg(DE)**

(74) Vertreter: **Koch, Ingo, Dr.-Ing. et al**
**Philips Patentverwaltung GmbH Wenden-**
**strasse 35 Postfach 10 51 49**
**W-2000 Hamburg 1(DE)**

## Beschreibung

Die Erfindung bezieht sich auf einen optischen Polarisationsregler mit einer Wellenleiterstruktur zur Umformung des Polarisationszustandes eines hindurchgeführten optischen Strahls und mit Einrichtungen zur Einstellung der Koppelkonstanten K der TE- und TM-Moden des optischen Strahls und zur Einstellung der Differenz $\Delta \beta$ der Ausbreitungskonstanten $\beta_{TE}$ und $\beta_{TM}$ dieser Moden.

Derartige nach der DE-OS 36 00 458 bekannte Anordnungen dienen dazu, den Polarisationszustand eines optischen Strahls gezielt zu verändern. Insbesondere kann linear polarisiertes Licht in elliptisch polarisiertes Licht vorgegebener Polarisation umgewandelt werden. Vorzugsweise werden solche als Streifenwellenleiter ausgebildeten Bauelemente für den Überlagerungsempfang in der optischen Kommunikationstechnik benötigt. Dabei müssen zwei optische Strahlen, deren Frequenzen sich um eine Zwischenfrequenz unterscheiden, mit möglichst gleichem Polarisationszustand überlagert werden. Das gleiche gilt für Anwendungsfälle, bei denen gleichfrequente Strahlen (Zwischenfrequenz Null) zu überlagern sind. Nicht nur die Quotienten der in zueinander senkrechten Ebenen geführten TM- und TE-Moden müssen für beide Strahlen gleich sein, sondern auch die jeweiligen Phasenunterschiede der beiden Moden. Das kann im allgemeinen nur durch eine Regelung des Polarisationszustandes einer der beiden Strahlen, z.B. des Lokaloszillatorstrahls, erreicht werden, welcher dem zeitlich schwankenden Polarisationszustand einer über eine optische Leitung ankommenden Strahls anzupassen ist. Ohne Nachregelung würden Schwankungen der Intensität des zu empfangenden zwischenfrequenten Signals entstehen (vergl. auch Electronic Letters 1985, Vol. 21, S. 787-788).

Bei dem bekannten monolithischen Bauelement der eingangs genannten Art dient als Wellenleiterstruktur ein elektrooptisches Bauelement, bei welchem über verschiedene kompliziert aufgebaute, an elektrische Spannung gelegte Elektrodensysteme einerseits K und andererseits $\Delta \beta$ je für sich einstellbar sind.

Der Erfindung liegt die Aufgabe zugrunde, eine andersartige Anordnung der eingangs genannten Art zu schaffen.

Die Lösung gelingt dadurch, daß die Wellenleiterstruktur ein magnetooptisches Bauelement ist, und daß die Koppelkonstante K durch ein auf die Wellenleiterstruktur einwirkendes magnetisches Feld und die Differenz$\Delta \beta$ durch eine auf die Wellenleiterstruktur ausgeübte mechanische Verformungskraft einstellbar sind.

Ein erfindungsgemäßer Polarisationsregler ist mit einem weniger aufwendigen magnetooptischen Bauelement als Streifenwellenleiter aufgebaut.

Auch mit diesem ist in einem einheitlichen Körper nicht nur die Regelung von K, sondern auch die Regelung von $\Delta \beta$ auf die im Anspruch 1 angegebene Weise möglich.

Da die für magnetooptische Bauelemente geeigneten Schichtwerkstoffe auch für andere Elemente der integrierten Optik notwendig sind, kann der erfindungsgemäße Polarisationsregler mit anderen bekannten optischen Elementen wie insbesondere einem Isolator in einfacher Weise vereinigt werden.

Die zur Regelung der Phasendifferenz $\Delta \beta$ erforderliche Druckkraft kann auf verschiedene Weise auf die lichtführende Wellenleiterstruktur aufgebracht werden.

Dabei ist im Normalfall darauf zu achten, daß die mechanische Spannung über den gesamten magnetooptischen Wellenleiter gleichmäßig verteilt wird. Zur Erzielung spezieller Effekte kann es jedoch gegebenenfalls vorteilhaft sein, die mechanischen Kräfte ungleich auf die Schichtflächen einwirken zu lassen.

Es ist vorteilhaft, nicht nur entweder positive oder negative Druckkräfte aufzubringen, sondern den Regelbereich durch Aufbringung von positiven Druckkräften bis hin zu negativen Druckkräften zu erweitern.

Eine dafür vorteilhafte Lösung ist dadurch gekennzeichnet, daß die mechanische Verformungskraft durch ein auf die Wellenleiterstruktur aufgebrachtes Biegemoment erzeugt ist.

Es ist auch möglich, daß die mechanische Verformungskraft über einen Stempel senkrecht auf die Schichtebenen einwirkt.

Eine besonders kompakte Lösung, welche auf einfache Weise eine genaue und fein abgestufte Regelung ermöglicht, ist dadurch gekennzeichnet, daß ein Piezoelement mit einer Schicht der magnetooptischen Wellenleiterstruktur unmittelbar verbunden, insbesondere verklebt ist.

Ein für die Erfindung verwendetes magnetooptisches Bauelement ist vorzugsweise so aufgebaut, daß auf einem reinen oder substituierten aus Gadolin-Gallium-Granat (GGG) bestehenden Substrat weitere Schichten auf der Basis von reinem oder substituiertem (z.B. mit Blei/Wismut/Gallium)-seltene Erden-Eisen-Granat epitaxial aufgebracht sind. Dabei kann es zweckmäßig sein, daß auf der Substratschicht und/oder auf einer oberen Mantelschicht Absorptionsschichten aufgebracht sind.

Brechungsindizes der oberen und der unteren Mantelschicht müssen kleiner als derjenige der zwischen diesen liegenden Wellenleiterschicht sein.

Die Regelung der Koppelkonstanten K kann in bekannter Weise (vergl. GB-A 15 29 374) durch Aufbringen eines Magnetfeldes erfolgen, dessen in Richtung des optischen Strahls wirksame Komponente geändert wird.

Eine besonders vorteilhafte Kombination eines Polarisationsreglers mit einem für Laserlichtquellen erforderlichen optischen Isolator ergibt sich dadurch, daß der Polarisationsregler auf einem gemeinsamen Substratkörper mit einem im wesentlichen einen gleichen Schichtaufbau aufweisenden optischen Isolator verbunden ist.

Zwischen Isolator und Polarisationsregler kann zusätzlich ein Abschnitt des Wellenleiters als Polarisator ausgebildet sein.

Eine mechanische Entkopplung des Polarisationsreglers vom Isolator erreicht man vorteilhaft dadurch, daß die vereinigten Baugruppen durch zwischen ihnen befindliche und quer zur Richtung des optischen Strahls verlaufende Einkerbungen entkoppelt sind.

Eine Beeinflussung des Isolators durch das auf den Polarisationsregler aufgebrachte magnetische Feld läßt sich durch Abschirmung vermeiden, welche besonders wirksam dadurch erreichbar ist, daß in die Einbuchtungen ferromagnetische Schirmbleche eingreifen, welche aufgrund ihrer hohen magnetischen Permeabilität Streufelder auffangen. Die Erfindung und deren Vorteile werden anhand der Beschreibung von in der Zeichnung dargestellten vorteilhaften Ausführungsbeispielen näher erläutert.

Figur 1     zeigt eine Anordnung zum selektiven Überlagerungsempfang von Sendelicht verschiedener Wellenlängen.

Figur 2     zeigt schematisch einen Querschnitt durch ein erfindungsgemäßes magnetooptisches Bauelement, bei welchem die einstellbare Druckkraft durch ein Piezoelement erzeugt ist.

Figur 3     deutet eine besonders vorteilhafte Möglichkeit der Erzeugung der gewünschten Verformungskraft durch ein Biegemoment an, welches durch ein direkt anliegendes Piezoelement erzeugt wird.

Figur 4     zeigt die Aufsicht auf eine monolithische Einheit eines optischen Isolators und eines erfindungsgemäßen Polarisationsreglers.

Figur 5     zeigt einen Querschnitt durch die Anordnung nach Figur 4.

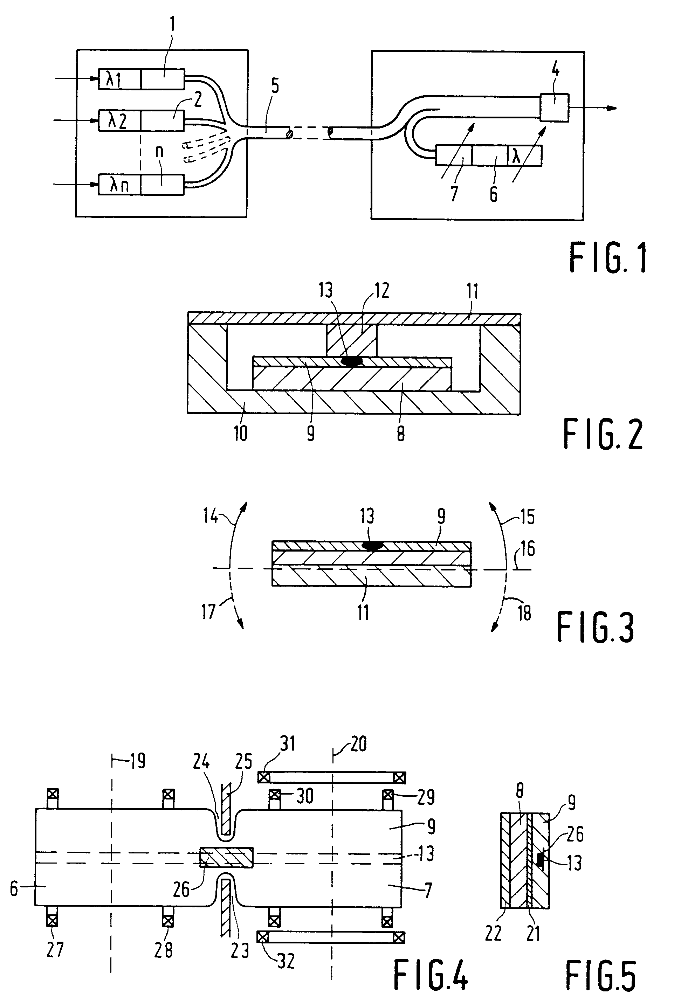

In Figur 1 werden senderseitig mit Nachrichtensignalen codierte Sendestrahlen der Wellenlängen $\lambda_1$ bis $\lambda_n$ jeweils über optische Isolatoren 1 bis n in eine gemeinsame optische Übertragungsleitung 5 geleitet. Die Isolatoren verhindern, daß Licht in die üblicherweise als Halbleiterlaser ausgebildeten Sendelichtquellen zurückgestreut wird.

Den gesendeten Strahlen wird empfängerseitig ein Lichtstrahl eines Lokaloszillators mit einer Wellenlänge $\lambda_o$ überlagert, dessen Frequenz auf einen solchen Wert geregelt wird, daß die Differenzfrequenz zum selektiv zu empfangenden Strahl genau der Zwischenfrequenz entspricht, auf welche eine das elektrische Ausgangssignal des Photodetektors 4 erhaltende nicht dargestellte Empfängerschaltung abgestimmt ist.

Der Strahl des Lokaloszillators ist über den optischen Isolator 6 und danach zusätzlich über den Polarisationsregler 7 geleitet. Durch den Polarisationsregler 7 wird der Polarisationszustand des Lokaloszillatorstrahls dem zeitlich schwankenden Polarisationszustand des empfängerseitig eintreffenden Sendestrahls angepaßt.

Der Polarisationsregler 7 besteht aus einem in an sich bekannter Weise aufgebauten magnetooptischen Bauelement, welchem Einrichtungen zugeordnet sind, welche die gezielte Einstellung einerseits von K und andererseits von $\Delta\beta$ erlauben. Das magnetooptische Bauelement ist ein Wellenleiter, dessen optischen Eigenschaften durch ein magnetisches Feld und durch eine mechanische Spannung verändert werden können.

Die Koppelkonstante K, welche praktisch der spezifischen Faraday-Drehung entspricht, läßt sich in bekannter Weise durch die Richtung des Magnetfeldes relativ zur Richtung der Lichtausbreitung im Wellenleiter einstellen. Der Betrag des Magnetfeldes muß dabei stets eine bestimmte Mindeststärke haben, um das magnetooptische Material des Wellenleiters in Sättigung zu halten. Entscheidend für den Faraday-Effekt und somit für die Kopplung zwischen den Moden ist nur die Komponente des Magnetfeldes, welches in Lichtausbreitungsrichtung im Wellenleiter wirksam ist. Wenn Kmax die maximale Koppelkonstante und $\alpha$ der Winkel zwischen dem Magnetfeld und der Lichtausbreitungsrichtung sind, kann man Koppelkonstanten K gemäß der Beziehung $K_{max} \bullet \cos\alpha$ zwischen den Werten $K_{max}$ und $-K_{max}$ einstellen.

Die Differenz $\Delta\beta$, der Fortpflanzungskonstanten $\beta_{TM}$ und $\beta_{TE}$ der TM und der TE-Moden läßt sich erfindungsgemäß durch eine extern auf den Wellenleiter des magnetooptischen Bauelements aufgeprägte mechanische Spannung einstellen.

In Figur 2 ist eine Ausführungsform für eine Einrichtung zum Aufbringen einer mechanischen Spannung schematisch dargestellt. Die wellenleitende Struktur mit dem Substrat 8 und der Wellenleiterschicht 9 ist in ein starres Gehäuse 10 eingelegt. Mittels des Piezoelements 11 ist über den Stempel 12 eine mechanische komprimierende Druckkraft insbesondere auf den senkrecht zur Papierebene verlaufenden in die Wellenleiterschicht eingebetteten lichtführenden Streifen 13 aufbringbar. Da die zur Verformung erforderlichen Spannungen gezielt im lichtführenden Bereich 13 erzeugt werden, braucht das Piezoelement 11 nur relativ kleine Kräfte zu erzeugen.

Mittels eines Biegemoments können Druck- oder Zugspannungen aufgebracht werden, wie es anhand Figur 3 erkennbar wird, in welcher eine bevorzugte besonders kompakte Bauart dargestellt ist. Wenn Biegekräfte in Richtung der Pfeile 14 und 15 auf die Wellenleiterstruktur einwirken, entsteht in dem lichtleitenden Streifen 13 eine Druckspannung parallel zur Schichtebene, wobei mit 16 die spannungslose neutrale Schicht gestrichelt angedeutet ist. Die Druckspannung führt zur Ausdehnung insbesondere des Materials des Streifens 13 senkrecht zur Ebene der Schicht 9, als ob in dieser senkrechten Richtung eine Zugkraft ausgeübt wäre. Bei mit gestrichelten Richtungen 17 und 18 einwirkenden Kräften entsteht im Streifen 13 dagegen eine Zugspannung, welche eine Komprimierung des Streifens 13 senkrecht zur Ebene der Schicht 9 bewirkt. Durch Änderung der mechanischen Spannung von einem positiven bis zu einem negativen Maximum kann $\Delta\beta$ in einem großen Bereich variiert werden. Das geschieht durch das Piezoelement 11 bekannter Bauart, welches durch an seine Elektroden angelegte Spannungen konkav oder konvex gewölbt werden kann.

Für die Erfindung besonders geeignete Wellenleiterstrukturen sind epitaxiale Schichtkörper. Auf einer etwa 0,5 mm dicken GGG-Substratschicht 8 ist zunächst eine untere hoch absorbierende etwa 3 $\mu$m dicke Schicht aus Co-YIG aufgebracht. Darauf liegt eine untere Mantelschicht aus insbesondere mit Blei substituiertem Yttrium-Eisen-Granat (YIG) mit einer Dicke von etwa 4 $\mu$m. Eingebettet zwischen dieser und einer der unteren Mantelschicht gleichen oberen Mantelschicht ist die etwa 6 $\mu$m dicke wellenleitende Schicht 13 aus reinem oder auch substituiertem YIG. Die Brechungsindizes der Mantelschichten 9 sind geringfügig kleiner als der Brechungsindex der wellenleitenden Schicht 13.

Auf der oberen Mantelschicht kann eine weitere hoch absorbierende Schicht angeordnet sein, wobei dann gegebenenfalls die untere absorbierende Schicht entfallen kann.

Bei der in Figur 4 schematisch dargestellten Anordnung sind der Isolator 6 und der Polarisationsregler 7 als Bestandteile eines gemeinsam hergestellten magnetooptischen Bauelements aufgebaut. Einen Querschnitt an den Stellen der gestrichelten Linien 19 oder 20 zeigt Figur 5, in welcher gegenüber einer Schichtenfolge nach Figur 3 zusätzlich eine Absorptionsschicht 21 und eine nur schematisch angedeutete Biegeeinrichtung 22 mit einem Piezoelement erkennbar sind.

Für den Isolator 6 und dem Polarisationsregler 7 sind voneinander unabhängige Biegeeinrichtungen 22 vorzusehen, die jeweils nur auf die ihnen zugeordnete Baugruppe einwirken. Zur besseren mechanischen Entkoppelung der Baugruppen sind zwischen ihnen Einbuchtungen 23 und 24 vorgesehen, in welche ferromagnetische Schirmbleche 25 eingreifen, die verhindern sollen, daß Streulinien des auf den Polarisationsregler 7 einwirkenden Magnetfeldes auf den Isolator 6 übergreifen.

Im Einschnürungsbereich ist die wellenleitende Schicht 13 mit einer metallischen Deckschicht 26 versehen, wodurch dort die Wirkung eines Polarisators erzielt wird.

Die Ringspulen 27 und 28 sollen die Erzeugung eines Magnetfeldes in Ausbreitungsrichtung des Lichts andeuten, durch welches das Material magnetisch gesättigt wird. Dieses Magnetfeld kann auch dauermagnetisch erzeugt werden. Bei Verwendung von Spulen läßt sich durch Regelung des Stroms eine Feineinstellung des Faraday-Effekts erreichen.

Mittels der Kraftwirkung der dem Isolator zugeordneten Piezoeinrichtung 22 kann für den Isolator 6 ein Wert $\Delta\beta = 0$ eingehalten werden (phasematching).

Durch die dem Polarisationsregler 7 zugeordnete Piezoeinrichtung 22 ist dagegen in diesem Bereich in gewissen Grenzen ein beliebiger Wert $\Delta\beta$ einstellbar (phase-tuning).

Die Koppelkonstante K des Polarisationsreglers 7 wird durch ein elektrisch erzeugtes Magnetfeld auf den erforderlichen Wert geregelt. Die koaxial zum Schichtkörper ausgerichteten Ringspulen 29 und 30 erzeugen eine Feldkomponente in Richtung der wellenleitenden Schicht 13, die lateralen Ringspulen 31 und 32 eine dazu senkrechte Komponente in Richtung der Schichtebene. Vom Winkel $\alpha$ der aus diesen beiden Feldkomponenten gebildeten resultierenden Feldrichtung mit der Richtung der wellenleitenden Schicht 13 hängt die Koppelkonstante K ab.

**Patentansprüche**

1. Optischer Polarisationsregler mit einer Wellenleiterstruktur zur Umformung des Polarisationszustandes eines hindurchgeführten optischen Strahls und mit Einrichtungen zur Einstellung der Koppelkonstanten K der TE- und TM-Moden des optischen Strahls und zur Einstellung der Differenz $\Delta\beta$ der Ausbreitungskonstanten $\beta_{TE}$ und $\beta_{TM}$ dieser Moden, dadurch gekennzeichnet, daß die Wellenleiterstruktur ein magnetooptisches Bauelement 8, 9, 13 ist, und daß die Koppelkonstante K durch ein auf die Wellenleiterstruktur 8, 9, 13 einwirkendes magnetisches Feld und die Differenz $\Delta\beta$ durch eine auf die Wellenleiterstruktur ausgeübte mechanische Verformungskraft einstellbar sind.

2. Polarisationsregler nach Anspruch 1, dadurch gekennzeichnet, daß die mechanische Verformungskraft durch ein auf die Wellenleiterstruktur 8, 9, 13 aufgebrachtes Biegemoment erzeugt ist.

3. Polarisationsregler nach Anspruch 1 oder 2, dadurch gekennzeichnet, daß die mechanische Verformungskraft über einen Stempel (12) senkrecht auf die Schichtebenen einwirkt.

4. Polarisationsregler nach Anspruch 2, dadurch gekennzeichnet, daß ein Piezoelement 11 mit einer Schicht (8) der magnetooptischen Wellenleiterstruktur unmittelbar verbunden, insbesondere verklebt ist.

5. Polarisationsregler nach einem der Ansprüche 1 bis 4, dadurch gekennzeichnet, daß die Wellenleiterstruktur ein reines oder substituiertes Substrat (8) auf der Basis von insbesondere Gadolin-Gallium-Granat aufweist, auf welchem weitere Schichten 9, 13, 21 auf der Basis reinen oder substituierten (z.B. Blei, Wismut, Gallium) seltene Erden-Eisen-Granats epitaxial aufgebracht sind.

6. Polarisationsregler nach Anspruch 5, dadurch gekennzeichnet, daß auf der Substratschicht (8) und/oder auf einer oberen Mantelschicht Absorptionsschichten (21) aufgebracht sind.

7. Polarisationsregler nach einem der Ansprüche 1 bis 6, dadurch gekennzeichnet, daß er auf einem gemeinsamen Substratkörper 8 mit einem im wesentlichen den gleichen Schichtaufbau aufweisenden optischen Isolator 6 verbunden ist.

8. Polarisationsregler nach Anspruch 7, dadurch gekennzeichnet, daß zwischen dem Isolator 6 und dem Polarisationsregler 7 ein Polarisator 26 integriert ist.

9. Polarisationsregler nach Anspruch 7 oder 8, dadurch gekennzeichnet, daß die vereinigten Baugruppen durch zwischen ihnen befindliche quer zur Richtung des optischen Strahls verlaufende Einkerbungen mechanisch entkoppelt sind.

10. Polarisationsregler nach Anspruch 9, dadurch gekennzeichnet, daß in die Einbuchtungen hochpermeable ferromagnetische Schirmbleche eingreifen.

**Claims**

1. An optical polarization regulator having a waveguide structure for converting the state of polarization of an optical beam passed through and comprising devices for adjusting the coupling constant K between the TE and TM modes of the optical beam and for adjusting the difference $\Delta\beta$ of the propagation constants $\beta_{TE}$ and $\beta_{TM}$ of these modes, characterized in that the waveguide structure is a magneto-optical element (8, 9, 13), and in that the coupling constant K is adjustable by a magnetic field acting upon the waveguide structure (8, 9, 13) and the difference $\Delta\beta$ is adjustable by a mechanical deformation force exerted on the waveguide structure.

2. A polarization regulator as claimed in Claim 1, characterized in that the mechanical deformation force is produced by a bending moment applied to the waveguide structure (8, 9, 13).

3. A polarization regulator as claimed in Claim 1 or 2, characterized in that the mechanical deformation force acts perpendicularly on the layer planes through a die (12).

4. A polarization regulator as claimed in Claim 2, characterized in that a piezo-element (11) is directly connected, more particularly glued, to a layer (8) of the magneto-optical waveguide structure.

5. A polarization regulator as claimed in any one of Claims 1 to 4, characterized in that the waveguide structure has a pure or substituted substrate (8) on the basis of more particularly gadolinium-gallium-garnet to which further layers (9, 13, 21) on the basis of pure or substituted (for example lead, bismuth, gallium) rare earth-iron-garnet are epitaxially applied.

6. A polarization regulator as claimed in Claim 5, characterized in that absorption layers (21) are applied to the substrate layer (8) and/or to an upper cladding layer.

7. A polarization regulator as claimed in any one of Claims 1 to 6, characterized in that the waveguide structure (8, 9, 13) is connected on a common substrate body (8) to an optical isolator (6) having substantially the same layer structure.

8. A polarization regulator as claimed in Claim 7, characterized in that a polarizer (26) is integrated between the isolator (6) and the waveguide structure (8, 9, 13).

9. A polarization regulator as claimed in Claim 7 or 8, characterized in that the waveguide structure (8, 9, 13), the isolator (6) and possibly the polarizer are mechanically decoupled by notches located between them and extending at right angles to the direction of the optical beam.

10. A polarization regulator as claimed in Claim 9, characterized in that the notches are engaged by highly permeable ferromagnetic screening plates.

**Revendications**

1. Dispositif de commande de polarisation optique muni d'une structure de guide d'ondes pour la transformation de l'état de polarisation d'un faisceau optique ayant traversé ladite structure de guide d'ondes et de dispositifs pour le réglage de la constante de couplage K entre les modes TE et TM du faisceau optique et pour le réglage de la différence $\Delta\beta$ des constantes de propagation $\beta_{TE}$ et $\beta_{TM}$ de ces modes, caractérisé en ce que la structure de guide d'ondes est un composant magnéto-optique (8, 9, 13) et que la constante de couplage K peut être réglée par un champ magnétique agissant sur la structure de guide d'ondes (8, 9, 13) et la différence $\Delta\beta$ par une force de déformation mécanique exercée sur la structure de guide d'ondes.

2. Dispositif de commande de polarisation optique selon la revendication 1, caractérisé en ce que la force de déformation mécanique est fournie par un moment de flexion agissant sur la structure de guide d'ondes (8, 9, 13).

3. Dispositif de commande de polarisation optique selon la revendication 1 ou 2, caractérisé en ce que la force de déformation mécanique agit par l'intermédiaire d'un poinçon 12 perpendiculairement sur les plans de la couche.

4. Dispositif de commande de polarisation optique selon la revendication 2, caractérisé en ce qu'un élément piézo-électrique 11 est relié, notamment par collage, de façon directe à une couche 8 de la structure de guide d'ondes magnéto-optiques.

5. Dispositif de commande polarisation optique selon l'une des revendications 1 à 4, caractérisé en ce que la structure de guide d'ondes est un substrat (8), à l'état pur ou portant des substituants, à base de notamment grenat de gallium-gadolinium, sur lequel sont appliquées par voie épitaxiaie d'autres couches (9, 13, 21) à base de grenats de fer-terres-rares, à l'état pur ou portant des substituants (du plomb, du bismuth, du gallium).

6. Dispositif de commande de polarisation optique selon la revendication 5, caractérisé en ce que des couches d'absorption (21) sont appliquées sur la couche de substrat (8) et/ou sur une couche d'enveloppe supérieure.

7. Dispositif de commande de polarisation selon l'une des revendications 1 à 6, caractérisé en ce que la structure de guide d'ondes (8, 9, 13) sur un corps de substrat commun (8) est reliée à un isolateur optique (6) présentant essentiellement la même structure de couche.

8. Dispositif de commande de polarisation selon la revendication 7, caractérisé en ce qu'un polariseur (26) est intégré entre l'isolateur (6) et la structure de guide d'ondes (8, 9, 13).

9. Dispositif de commande de polarisation selon la revendication 7 ou 8, caractérisé en ce que la structure de guide d'ondes (8, 9, 13), l'isolateur (6) et éventuellement le polariseur sont découplés mécaniquement par des entailles réalisées entre ces derniers et s'étendant transversalement à la direction du faisceau optique.

10. Dispositif de commande de polarisation selon la revendication 9, caractérisé en ce que des plaques de blindage ferro-magnétiques fortement perméables agissent dans les entailles.

FIG.1

FIG.2

FIG.3

FIG.4

FIG.5